# EUROPEAN PATENT APPLICATION

(11) **EP 4 799 916 A2**
(43) Date of publication of application: **02.09.2026**
(21) Application number: 23956870.2
(22) Date of filing: 23.10.2023
(51) Int. Cl.: B63B 35/44, B63B 25/16, B63B 27/24, B63B 21/50, F03D 13/25, C25B 1/04, C25B 15/08, F25J 1/00

(54) **MARINE PLATFORM FOR PRODUCING, STORING, AND TRANSFERRING MARINE GREEN HYDROGEN**

(71) Applicant: Korea Institute of Ocean Science and Technology, Busan 49111 (KR)
(72) Inventor: PARK, Byeong Won, Busan 46772 (KR)
(74) Representative: EP&C
(86) International application number: PCT/KR2023/016488
(87) International publication number: WO 2025/089434

(57) **Abstract**

The present invention relates to an apparatus and method for producing, storing, and transferring hydrogen. According to the present invention, in order to address the problems of conventional systems and methods for producing, storing, and transferring marine green hydrogen, which are configured with a fixed structure in a small-scale offshore wind power generator on a coast or in a shallow sea area with a shallow depth of water, and thus, have low efficiency due to the difficulty in mass production of hydrogen, and a large storage space is occupied when the produced hydrogen is converted into a compressed gas form, and when the produced hydrogen is converted into ammonia, additional energy is required to extract the hydrogen again and there is a risk of environmental pollution and casualty in the event of an outflow accident, provided is a marine platform for producing, storing, and transferring marine green hydrogen, which is configured such that marine green hydrogen is produced through a floating marine structure configured to produce marine green hydrogen using electricity produced using renewable energy from the ocean, and simultaneously, the produced marine green hydrogen is stored, transferred, and offloaded through a single offshore platform (FPSO), thereby being possible to easily construct a large-scale production facility capable of producing, storing, and transferring marine green hydrogen without greenhouse gas emission on the basis of eco-friendly energy.

## Description

### TECHNICAL FIELD

The present invention relates to an apparatus and method for producing and storing hydrogen. More specifically, although conventional marine green hydrogen production systems and methods have been proposed as methods to achieve zero carbon emissions, such as by producing hydrogen by electrolyzing water using electricity generated from environmentally friendly renewable energy in the ocean, for example, wind or wave power generation, most existing marine green hydrogen production facilities consist of small-scale offshore wind turbines near the coast or fixed structures in shallow waters. Consequently, there were limitations in mass production of hydrogen and reduced efficiency. To address these issues, the invention relates to an offshore platform for the production, storage, and transportation of marine green hydrogen, configured to enable the easy construction of a large-scale marine green hydrogen production facility capable of mass-producing marine green hydrogen without any greenhouse gas emissions based on environmentally friendly energy, by utilizing an offshore platform configured to produce marine green hydrogen using electricity generated from renewable energy in the ocean.

Furthermore, the present invention addresses the problems of conventional marine green hydrogen storage and transport systems and methods, which, although methods for storing and transporting produced marine green hydrogen include converting hydrogen into compressed gas and transporting it to the coast via pipelines or converting it into ammonia, have disadvantages such as requiring a large storage space and a separate hydrogen supply chain on land due to the very low bulk density of hydrogen, and ammonia conversion, while capable of storing a large amount of hydrogen in the same storage space, requires additional energy to extract the hydrogen, and, in particular, poses risks of environmental pollution and human casualties in the event of a spill due to the toxicity of ammonia. To solve these issues, the invention is configured to enable the production of marine green hydrogen using electricity generated from renewable energy sources in the ocean via a floating structure, and to simultaneously perform the tasks of storage, transport, and offloading the produced marine green hydrogen through a single offshore platform (FPSO), thereby utilizing eco-friendly energy. This invention relates to an offshore platform for the production, storage, and transportation of marine green hydrogen, configured to enable the easy construction of a large-scale production facility capable of producing, storing, and transporting marine green hydrogen without any greenhouse gas emissions, with a relatively simple configuration and low cost.

### BACKGROUND

Recently, as environmental pollution and climate change have emerged as global issues, research on technologies to reduce carbon emissions, which is one of the major environmental pollutants, is actively underway.

Accordingly, marine green hydrogen, which is produced by electrolyzing water using electricity generated from various renewable energy sources in the ocean, such as wind or wave power generation, is attracting attention as a method to achieve zero carbon emissions. It is one of the eco-friendly alternative energies that will play an important role in achieving the global agenda of zero carbon emissions by 2050.

Here, as an example of prior art regarding the apparatus and method for producing marine green hydrogen as described above, first, there is a "hydrogen production plant using offshore wind power generation equipment" as presented in Korean Registered Patent Publication No. 10-1258937.

More specifically, the above-mentioned Korean Registered Patent Publication No. 10-1258937 describes a wind power generation unit that generates power using wind power at sea; a floating body that uses the power generated by the wind power generation unit to distribute hydrogen produced by the electrolysis of water to a plurality of storage tanks in accordance with the storage pressure; A hydrogen production plant using an offshore wind power generation facility, comprising a control device for controlling electrolysis and the position and attitude of a floating body, wherein the control device comprises: a charging module that charges a battery with primary power produced from a wind power generation unit and secondary power produced from a fuel cell and supplies the primary power and secondary power to a power supply unit; an electrolysis control module that provides power for operating the electrolysis device of the power supply unit to the electrolysis device; an electronic valve control module that controls the opening and closing of a plurality of electronic valves piped on a hydrogen line or oxygen line extended from an electrolysis tank installed on the floating body via a compressor; a compressor control module that controls the operation of a compressor to compress hydrogen produced in the electrolysis tank; a ballast water control module that distributes, stores, or discharges ballast water to a plurality of ballast tanks installed on the floating body; and a dynamic position control module that performs dynamic position control for a slewing propeller installed on the floating body, configured to adjust or distribute the amount of hydrogen stored in the tanks in response to changes in the amount of hydrogen produced.

In addition, as mentioned above, another example of prior art regarding an apparatus and method for producing marine green hydrogen is, for example, the "water electrolysis green hydrogen generation system using a vessel that produces electricity by water flow change" as presented in Korean Registered Patent Publication No. 10-2330052.

More specifically, the above-mentioned Korean Registered Patent Publication No. 10-2330052 describes a system that generates electricity by utilizing the flow rate of water flowing in when a ship is moving or anchored on the water surface, and generates green hydrogen using the generated electricity. The system comprises: a cabin section having the shape of a ship capable of floating and moving on a river or sea, and configured to allow water with accelerated flow rate in the direction of movement to flow in; and a power generation section installed inside the cabin section, which rotates a generator using the accelerated water to generate electricity. The present invention relates to a water electrolysis green hydrogen generation system using a vessel that produces electricity by varying the flow rate, comprising a means for generating green hydrogen by water decomposition that is installed in the cabin to be electrically connected to the power generation unit and receives the generated electricity to produce green hydrogen. By floating on rivers and seas and freely varying the flow rate of natural water flow by the degree of opening and closing of the head and tail gates, the operating time is increased and the quality of the electricity produced by the generator is improved, thereby improving cost-effectiveness, while simultaneously being configured to have high utility in rivers and seas and easy maintenance.

As described above, various devices and methods have been proposed to produce marine green hydrogen in the past, but the contents of the prior art as described above had the following limitations.

In other words, conventionally, marine green hydrogen is mainly produced by electrolysis using electricity generated from environmentally friendly marine energy, such as wind, wave, or tidal power. Recently, however, technology development is progressing in the form of storing and transporting hydrogen produced through P2G (Power to Gas) projects in the form of compressed gas.

However, since hydrogen has a very low volume density of about 3 Wh/L at atmospheric pressure, storing it in the form of compressed gas requires a relatively large amount of storage space, and there is a disadvantage in that a separate hydrogen supply chain must be established on land. If it is converted into ammonia instead of compressed gas, more hydrogen can be stored in the same storage space, but additional energy is required to extract the hydrogen again. In particular, due to the toxicity of ammonia, there is a risk of environmental pollution and human casualties in the event of a spill. Therefore, to utilize hydrogen more efficiently in various fields, the development of more efficient storage and transportation methods is required along with the mass production of hydrogen.

Here, when the large volume of produced marine green hydrogen is stored in the form of cryogenic liquid hydrogen, it is possible to store about twice as much liquid hydrogen as the same volume of compressed hydrogen gas, making it suitable for large-scale storage. Since liquid hydrogen has characteristics that are more suitable for storage and transport compared to compressed gas, it is expected to have advantages in terms of cost and efficiency in long-distance transport using ships. However, the content of the prior art as described above has not presented any technology that can produce large volumes of marine green hydrogen using such eco-friendly energy and store and transport it in the form of liquid hydrogen.

Therefore, in order to overcome the limitations of the conventional marine green hydrogen production systems and methods described above, it is desirable to propose a new type of offshore platform for the production, storage, and offloading of marine green hydrogen (Floating Production Storage and Offloading; FPSO) configured so that the process of producing marine green hydrogen using a floating structure that produces marine green hydrogen using electricity generated from renewable energy in the ocean, storing it in liquid hydrogen form, transporting it, and then offloading it can be carried out through a single platform. However, no device or method that satisfies all such requirements has been presented yet.

### SUMMARY

### Technical challenges

The present invention aims to solve the problems of the prior art as described above. Accordingly, the objective of the present invention is to present a marine platform for the production, storage, and transportation of marine green hydrogen, configured to enable the easy construction of a large-scale marine green hydrogen production facility capable of mass-producing marine green hydrogen without any greenhouse gas emissions based on eco-friendly energy. This is achieved by utilizing a marine platform configured to produce marine green hydrogen using electricity generated from renewable energy in the ocean, thereby overcoming the limitations of prior art marine green hydrogen production systems and methods, which suffered from low efficiency due to the difficulty of mass-producing hydrogen as they are mostly composed of small-scale offshore wind turbines in coastal areas or fixed structures in shallow waters.

In addition, another objective of the present invention is to solve the problems of conventional marine green hydrogen storage and transport systems and methods, which, in the past, methods for storing and transporting produced marine green hydrogen included converting hydrogen into a compressed gas form and transporting it to the coast via pipelines or converting it into ammonia. However, in the case of compressed gas, due to the characteristics of hydrogen having a very low volume density, it has the disadvantage of occupying a large storage space and requiring a separate hydrogen supply chain on land. In the case of ammonia conversion, while it can store a large amount of hydrogen in the same storage space, additional energy is required to extract the hydrogen again. In particular, due to the toxicity of ammonia, there is a risk of environmental pollution and human casualties in the event of a spill. To solve these problems, the present invention is configured so that marine green hydrogen is produced using electricity generated from renewable energy in the ocean via a floating structure, and the operations of storing, transporting, and offloading the produced marine green hydrogen can be performed through a single offshore platform (FPSO). The present invention aims to propose an offshore platform for the production, storage, and transport of marine green hydrogen, configured to enable the easy construction of a large-scale production facility capable of producing, storing, and transporting marine green hydrogen with zero greenhouse gas emissions based on eco-friendly energy, with a relatively simple configuration and low cost.

### Means of solving the problem

To achieve the above-mentioned purpose, according to the present invention, a marine platform for the production, storage, and transport of marine green hydrogen is provided, comprising: a power generation unit that performs a process of generating electric energy at sea using eco-friendly energy; a hydrogen production unit that performs a process of producing hydrogen by electrolyzing water using the electric energy generated by the power generation unit; a hydrogen storage unit that performs a process of converting the hydrogen produced through the hydrogen production unit into liquid hydrogen through a liquefaction process and storing it; a hydrogen unloading unit that includes a mooring system and an unloading system for transporting and unloading the liquid hydrogen stored in the hydrogen storage unit; and a marine platform structure formed in the form of a floating structure to form the main body of the marine platform.

Here, the power generation unit is characterized by being composed of an eco-friendly offshore power generation system that generates electric energy at sea using at least one of wind power, tidal power, wave power, and solar power, or an eco-friendly offshore power generation complex equipped with a plurality of eco-friendly offshore generators.

In addition, the offshore platform is configured as an eco-friendly offshore power generation system or eco-friendly offshore power complex in which the power generation unit is separately installed outside the offshore platform structure, and the hydrogen production unit, the hydrogen storage unit, and the hydrogen offloading unit are installed on the offshore platform structure and formed as a single unit, so that the operations of producing, storing, and offloading hydrogen are each performed using the power supplied through the power generation unit, thereby enabling the production of hydrogen without the emission of greenhouse gases containing carbon, and at the same time, the operations of producing marine green hydrogen through a floating structure, storing the produced marine green hydrogen in the form of liquid hydrogen, and transporting and offloading the stored liquid hydrogen can be performed through a single platform, characterized by being configured as a Floating Storage and Offloading (FPSO).

In addition, the above-mentioned offshore platform structure is configured in the form of an FPSO vessel in which the hydrogen production unit, the hydrogen storage unit, and the hydrogen unloading unit are each installed, so that the production, storage, transportation, and unloading of hydrogen can all be performed through a single platform.

Furthermore, the offshore platform is characterized by being configured to include an Energy Storage System (ESS) separately installed on the offshore platform structure to ensure stable power supply even when sufficient power is not supplied through the eco-friendly offshore power generation facility of the power generation unit.

In addition, the offshore platform is characterized by being configured to include an Emergency ESS and a Hydrogen Fuel Cell separately installed on the offshore platform structure to enable power supply even in emergency situations where power is not supplied, in addition to the Energy Storage System (ESS).

Furthermore, the offshore platform is characterized by being configured to include a seawater desalination facility that performs a process of converting seawater flowing in from the outside into fresh water and supplying it to the hydrogen production unit in order to produce hydrogen by electrolyzing water with the power generated through the power generation unit.

Furthermore, the hydrogen production unit is configured to perform a process of producing hydrogen by electrolyzing water using PEM (Proton Exchange Membrane Electrolysis) or AE (Alkaline Electrolysis), using electrical energy supplied from the power production unit and fresh water supplied through the seawater desalination facility.

In addition, the hydrogen storage unit is configured to perform a process of storing the gaseous hydrogen produced by the hydrogen production unit in a compressed gas form in a dedicated storage tank before liquefying it, in order to supply hydrogen to an external system including the hydrogen fuel cell according to a predetermined setting, and storing the liquefied hydrogen generated through the liquefaction process in a plurality of C-type storage tanks.

In addition, the hydrogen storage unit includes a boil-off gas (BOG) treatment means installed in each storage tank to recover boil-off gas hydrogen; And it is characterized by further comprising a ventilation mast for releasing hydrogen gas that leaks or is generated by BOG into the atmosphere.

Furthermore, the hydrogen offloading unit is characterized by comprising a loading arm and a turret mooring system for offloading liquid hydrogen.

In addition, according to the present invention, an FPSO vessel is provided that is configured to enable the production, storage, transportation, and offloading of marine green hydrogen using the offshore platform for the production, storage, and transportation of marine green hydrogen described above.

In addition, according to the present invention, a method for producing marine green hydrogen configured to enable the production of hydrogen without the emission of carbon-containing greenhouse gases using eco-friendly energy comprises: a marine platform construction step in which a process is performed to construct a marine platform for the production, storage, transportation, and unloading of marine green hydrogen; a production step in which a process is performed to produce marine green hydrogen using the marine platform constructed through the marine platform construction step; a storage step in which a process is performed to convert and store the marine green hydrogen produced through the production step into liquid hydrogen using the marine platform; and a transportation step in which a process is performed to transport the marine green hydrogen produced through the storage step to a predetermined destination using the marine platform. A method for producing marine green hydrogen is provided, comprising a loading step in which a process for unloading marine green hydrogen transported through the transport step is performed using the marine platform, wherein the marine platform is configured in the form of an FPSO vessel using the marine platform for the production, storage, and transport of marine green hydrogen described above.

### Effects of the invention

As described above, according to the present invention, a floating structure for the production, storage, and transport of marine green hydrogen is provided, which is configured to produce marine green hydrogen using electricity produced from renewable energy in the ocean, and simultaneously store, transport, and offload the produced marine green hydrogen through a single platform. This allows for the easy construction of a large-scale production facility capable of producing, storing, and transporting marine green hydrogen based on eco-friendly energy without any greenhouse gas emissions, with a relatively simple configuration and low cost.

In addition, according to the present invention, a structure for a marine green hydrogen production, storage, and transporting platform (FPSO) is provided, which is configured to easily construct a large-scale production facility capable of producing, storing, and transporting marine green hydrogen without any greenhouse gas emissions based on eco-friendly energy as described above, with a relatively simple configuration and low cost. This solves the problems of conventional marine green hydrogen production systems and methods, which had limitations in efficiency due to the difficulty of mass production of hydrogen caused by small-scale offshore wind turbines in coastal areas or fixed structures in shallow waters.

In addition, according to the present invention, a structure for a marine green hydrogen production, storage, and transporting platform (FPSO) is provided, which is configured to easily construct a large-scale production facility capable of producing, storing, and transporting marine green hydrogen without any greenhouse gas emissions based on eco-friendly energy as described above, with a relatively simple configuration and low cost. This solves the problems of conventional marine green hydrogen storage and transport systems and methods, which had limitations such as requiring a separate hydrogen supply chain on land and occupying a large amount of storage space when converting hydrogen into a compressed gas form to transport it to the coast via a pipeline, which is necessary for storing and transporting the produced marine green hydrogen, and requiring additional energy to extract the hydrogen again when converting it into ammonia, which is possible for storing a large amount of hydrogen in the same storage space, and particularly, the risk of environmental pollution and human casualties in the event of a spill due to the toxicity of ammonia.

Furthermore, according to the present invention, a structure for a FPSO (Floating Production, Storage and Offloading) for the production, storage, and transport of marine green hydrogen is provided, which is configured to easily construct a large-scale production facility capable of producing, storing, and transporting marine green hydrogen without any greenhouse gas emissions based on eco-friendly energy as described above, with a relatively simple configuration and low cost. As a result, liquid hydrogen can be produced at sea and unloaded immediately, allowing for immediate transport without land-based work not only domestically but also for export overseas. Additionally, the risk of hydrogen leakage, fire, or explosion can be eliminated through the floating structure installed in the open sea far from land. Furthermore, by constructing a large-capacity centralized platform corresponding to, for example, a large-scale offshore wind power complex, hydrogen can be produced, stored, and supplied more efficiently. This has the advantage of revitalizing the hydrogen economy through the expansion of hydrogen mobility and energy sector supply resulting from the activation of large-scale marine green hydrogen supply, and contributing to the establishment and implementation of national policies such as the reduction of carbon dioxide and fine dust.

### BRIEF DESCRIPTION OF THE DRAWINGS

FIG. 1 is a block diagram schematically showing the overall configuration of an offshore platform for the production, storage, and transport of marine green hydrogen according to an embodiment of the present invention.
FIG. 2 is a conceptual diagram schematically showing an example of the actual configuration of an offshore platform for the production, storage, and transport of marine green hydrogen according to an embodiment of the present invention shown in FIG. 1.
FIG. 3 is a diagram schematically showing the processing steps for the production, storage, and unloading of marine green hydrogen performed on an offshore platform for the production, storage, and transport of marine green hydrogen according to an embodiment of the present invention.
FIG. 4 is a diagram schematically showing an example of the specific configuration when an offshore platform for the production, storage, and transport of marine green hydrogen according to an embodiment of the present invention is installed on a ship.

### DETAILED DESCRIPTION OF THE PREFERRED EMBODIMENTS

Hereinafter, with reference to the attached drawings, specific embodiments of an offshore platform for the production, storage, and transport of marine green hydrogen according to the present invention will be described.

Herein, it should be noted that the description below is merely one embodiment for implementing the present invention, and the present invention is not limited to the content of the embodiment described below.

In addition, it should be noted that in the description of the embodiments of the present invention below, detailed descriptions of parts that are identical or similar to the prior art or that are judged to be easily understood and implemented by those skilled in the art have been omitted for the sake of brevity.

That is, the present invention relates to an offshore platform for the production, storage, and transport of marine green hydrogen, configured to easily construct a large-scale marine green hydrogen production facility capable of mass-producing marine green hydrogen without any greenhouse gas emissions based on eco-friendly energy, by utilizing an offshore platform configured to produce marine green hydrogen using electricity produced from renewable energy in the ocean, in order to solve the problems of conventional marine green hydrogen production systems and methods, which, as described below, are mostly composed of small-scale offshore wind turbines in coastal areas or fixed structures in shallow waters, making mass production of hydrogen difficult and resulting in low efficiency.

In addition, as described below, the present invention addresses the problems of conventional marine green hydrogen storage and transport systems and methods, which, in order to solve the limitations of conventional marine green hydrogen storage and transport systems and methods, have the disadvantage of requiring a separate hydrogen supply chain on land and occupying a large amount of storage space due to the characteristics of hydrogen having a very low volume density, and the ammonia conversion method, while capable of storing a large amount of hydrogen in the same storage space, requires additional energy to extract the hydrogen again, and, in particular, poses a risk of environmental pollution and human casualties in the event of a spill due to the toxicity of ammonia. This invention enables the production of marine green hydrogen through a floating structure that produces marine green hydrogen using electricity generated from renewable energy in the ocean, and simultaneously allows the storage, transport, and offloading of the produced marine green hydrogen to be carried out through a single offshore platform (FPSO). The present invention relates to an offshore platform for the production, storage, and transport of marine green hydrogen, configured to enable the production, storage, and transport of marine green hydrogen without any greenhouse gas emissions based on eco-friendly energy, and to facilitate the construction of a large-scale production facility with a relatively simple configuration and low cost.

Next, with reference to the drawings, the specific details of the offshore platform for the production, storage, and transport of marine green hydrogen according to the present invention will be described.

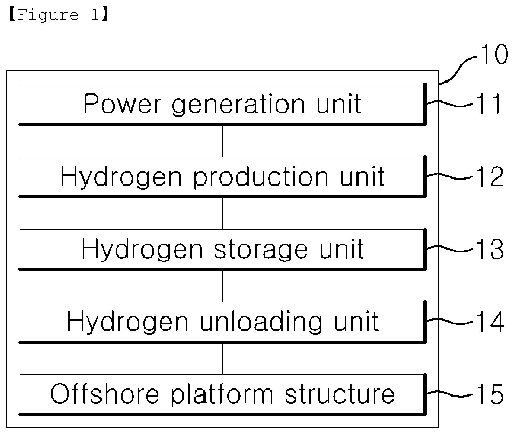

More specifically, first, with reference to FIG. 1, FIG. 1 is a block diagram schematically showing the overall configuration of an offshore platform (10) for the production, storage, and transport of marine green hydrogen according to an embodiment of the present invention.

As shown in FIG. 1, the offshore platform (10) for the production, storage, and transport of marine green hydrogen according to an embodiment of the present invention may be broadly composed of: a power generation unit (11) for performing a process to generate electrical energy at sea; a hydrogen production unit (12) for performing a process to produce hydrogen by electrolyzing water using the electrical energy generated by the power generation unit (11); a hydrogen storage unit (13) for performing a process to convert the hydrogen produced through the hydrogen production unit (12) into cryogenic liquid hydrogen through a liquefaction process and store it; a hydrogen unloading unit (14) for including a mooring system and an unloading system for transporting and unloading the liquid hydrogen stored in the hydrogen storage unit (13); and an offshore platform structure (15) formed in the form of a floating structure on the sea to form the main body of the offshore platform (10) on which each of the above-mentioned units is installed.

Here, the power generation unit (11) described above may be configured as an eco-friendly offshore power generation system that generates electric energy at sea using eco-friendly energy such as wind, tidal, wave, or solar power, or as an eco-friendly offshore power generation complex equipped with multiple generators.

In addition, the hydrogen production unit (12), hydrogen storage unit (13), and hydrogen unloading unit (14) described above may each be installed on an offshore platform structure (15) and formed as a single unit, and configured to perform the work of producing, storing, and unloading hydrogen using power supplied through the power generation unit (11).

To this end, the above-mentioned offshore platform structure (15) is configured in the form of a platform or structure that can be installed at sea to produce and store hydrogen, but there are no particular restrictions. However, preferably, the above-mentioned hydrogen production unit (12), hydrogen storage unit (13), and hydrogen unloading unit (14) are each configured in the form of a ship, thereby enabling the production, storage, transportation, and unloading of hydrogen through a single platform.

Accordingly, from the configuration described above, the offshore platform (10) for the production, storage, and transport of marine green hydrogen according to the embodiment of the present invention can be configured in the form of a Floating Storage and Offloading (FPSO) facility, which is configured so that the work of producing marine green hydrogen through a floating structure using electric energy generated using eco-friendly energy, storing the produced marine green hydrogen in the form of liquid hydrogen, and transporting and offloading the stored liquid hydrogen can be performed through a single platform.

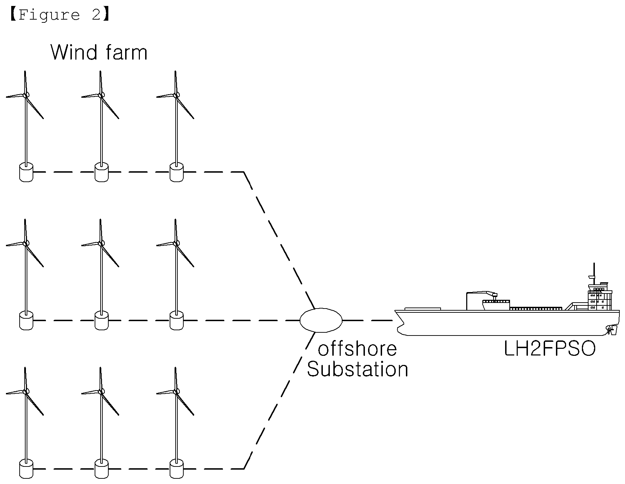

More specifically, referring to FIG. 2, FIG. 2 is a conceptual diagram schematically showing an example of the actual configuration of the offshore platform (10) for the production, storage, and transport of marine green hydrogen according to the embodiment of the present invention shown in FIG. 1.

As shown in FIG. 2, the offshore platform (10) for the production, storage, and transport of marine green hydrogen according to an embodiment of the present invention is configured such that the above-mentioned power generation unit (11) is installed in an eco-friendly power generation complex at sea, and the above-mentioned offshore platform structure (15) is configured in the form of an FPSO vessel equipped with a hydrogen production unit (12), a hydrogen storage unit (13), and a hydrogen unloading unit (14), so that all processes of producing, storing, transporting, and unloading hydrogen can be performed by receiving power generated using eco-friendly energy from the power generation unit (11).

Here, in the embodiment shown in FIG. 2, the present invention is illustrated with the example that the power generation unit (11) is formed as an offshore wind power plant and receives power through a dynamic power cable. However, the present invention is not necessarily limited to the case of the above embodiment. That is, the present invention may be configured to supply power through other eco-friendly energy sources other than wind power, such as wave power generation, tidal power generation, solar power generation, etc. Therefore, it should be noted that the present invention can be configured by various modifications and changes as needed by those skilled in the art within the scope of not departing from the purpose and essence of the present invention.

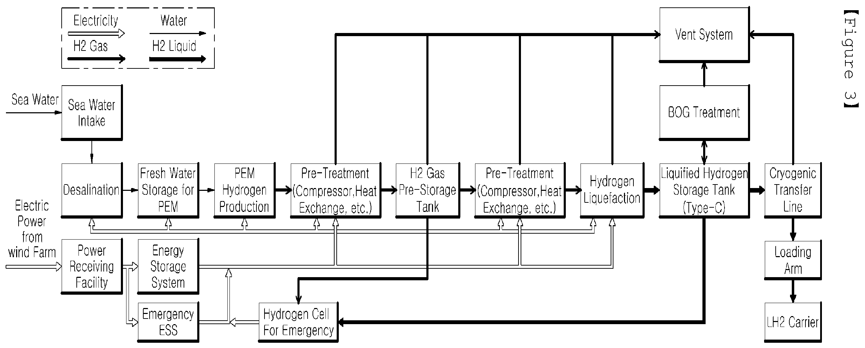

Also, referring to FIG. 3, FIG. 3 is a schematic diagram showing the process of production, storage, and unloading of marine green hydrogen performed on an offshore platform (10) for the production, storage, and transfer of marine green hydrogen according to an embodiment of the present invention configured as shown in FIG. 1 and FIG. 2.

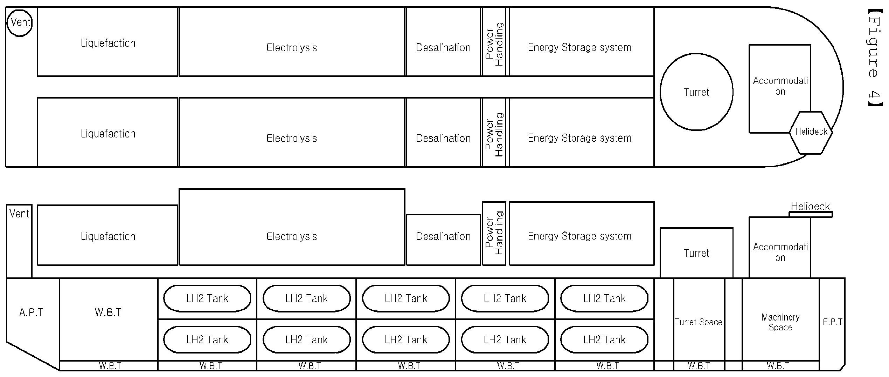

Additionally, referring to FIG. 4, FIG. 4 is a schematic diagram showing a specific configuration example for the case where an offshore platform (10) for the production, storage, and transfer of marine green hydrogen according to an embodiment of the present invention configured as shown in FIG. 1 to FIG. 3 is installed on a ship.

As shown in FIGS. 3 and 4, the process of producing, storing, and unloading marine green hydrogen involves first supplying power to the hydrogen production unit (12), hydrogen storage unit (13), and hydrogen unloading unit (14), each equipped in a marine platform structure (15) formed in the shape of an FPSO vessel, through the marine eco-friendly power generation facility of the power generation unit (11) mentioned above.

Here, the marine platform (10) mentioned above may further include an Energy Storage System (ESS) installed in the marine platform structure (15) to ensure stable power supply even when sufficient power is not supplied through the marine eco-friendly power generation facility of the power generation unit (11), as shown in FIGS. 3 and 4.

With this configuration, any excess power consumed in the operation of the offshore platform (10) or some of the supplied electrical energy can be stored in an energy storage system (ESS), and power can be supplied through the ESS when the electrical energy supplied from the power generation unit (11) falls below a certain level, thereby ensuring a stable power supply at all times.

At this time, the offshore platform (10) can be configured to respond to emergency situations where power is not supplied by additionally installing an Emergency ESS and a Hydrogen Fuel Cell to supply power in emergency situations, as shown in FIGS. 3 and 4.

In addition, as shown in FIGS. 3 and 4, the above-described offshore platform (10) may further include a seawater desalination facility that performs a process of converting seawater flowing in from the outside into fresh water and supplying it to the hydrogen production unit (12) in order to produce hydrogen by electrolyzing water with the eco-friendly power supplied as described above.

That is, the above-described hydrogen production unit (12) produces hydrogen by electrolyzing water using the eco-friendly electric energy supplied from the power production unit (11) as described above and fresh water supplied through the seawater desalination facility, and the produced hydrogen is transferred to the hydrogen storage unit (13) and converted into cryogenic liquid hydrogen through a liquefaction process and stored.

Here, as a method for producing hydrogen, methods such as PEM (Proton Exchange Membrane Electrolysis) or AE (Alkaline Electrolysis) can be used, and PEM is the most suitable in terms of sustainability and environmental impact.

In addition, as shown in FIGS. 3 and 4, gaseous hydrogen generated through the PEM is stored in a compressed form in a dedicated storage tank before the liquefaction process to handle various hydrogen supplies from the electrolyzer, and the liquid hydrogen generated through the liquefaction process is stored in several C-type storage tanks, each storage tank being placed in a cargo hold compartment prepared in the hull.

At this time, a boil-off gas (BOG) treatment system for recovering boil-off hydrogen may be added to each storage tank, as shown in FIGS. 3 and 4, and the capacity and number of C-type storage tanks may be appropriately configured according to the configuration of the platform, and in particular, the number of storage tanks may be determined based on the maximum capacity of the liquid hydrogen production and unloading interval.

Furthermore, the above-mentioned hydrogen offloading unit (14) can be configured to perform the offloading of liquid hydrogen using an offloading system comprising a loading arm, as shown in FIGS. 3 and 4.

More specifically, there is a concern that problems may occur with liquid hydrogen in terms of heat loss and low offloading speed during the offloading of liquid hydrogen. Since there is still a lack of technology to transport cryogenic liquid hydrogen for long-distance offloading, the offloading method using a loading arm is the most suitable at the current level of technology.

Accordingly, in the present invention, a single-point mooring system (Turret Mooring) is considered according to the offloading method through a side-by-side loading arm, and to maximize the efficiency of the weather vane, this loading arm can be configured to be placed in a predetermined dedicated space at the forward position of the hull.

In addition, as shown in FIGS. 3 and 4, a mooring system and a dynamic power cable are connected to the turret system, and hydrogen gas that leaks or is generated by BOG can be configured to be released into the atmosphere through a ventilation mast.

From the configuration described above, according to the present invention, a marine platform capable of producing, storing, transporting, and unloading marine green hydrogen based on eco-friendly energy without any greenhouse gas emissions such as carbon can be easily implemented, and thereby, hydrogen can be efficiently produced, stored, and supplied as a large-capacity centralized platform corresponding to a large-scale offshore power plant.

In addition, according to the present invention, as shown in FIG. 4, the above-described offshore platform structure (15) is formed into a ship, and a plurality of storage tanks are provided at the bottom of the ship to implement the above-described hydrogen storage unit (13). At the same time, a hydrogen production unit (12) that produces hydrogen through water electrolysis using eco-friendly power supplied from an offshore eco-friendly power plant and a hydrogen unloading unit (14) equipped with a loading arm for unloading liquid hydrogen are installed at the top of the ship, respectively. This allows for the easy implementation of an FPSO ship configured to enable the production, storage, transportation, and unloading of marine green hydrogen through a single platform based on eco-friendly energy without any greenhouse gas emissions such as carbon.

In addition, according to the present invention, the activation of large-scale marine green hydrogen supply can contribute to the establishment and implementation of national policies such as the activation of the hydrogen economy and the reduction of carbon dioxide and fine dust through the expansion of hydrogen mobility and energy sector supply. Furthermore, since it is composed of a floating structure installed in the open sea, the risk of hydrogen leakage/fire/explosion can be placed far away from land space, and liquid hydrogen can be produced and unloaded immediately at sea, so it has the advantage of being able to transport the produced hydrogen without land work, not only domestically but also when exporting it overseas.

That is, according to the present invention, the efficiency of marine green hydrogen production is maximized by implementing a large-capacity centralized production, storage, and unloading system through the liquefaction of produced hydrogen. Furthermore, considering that the power consumption and maximum demand of each system for seawater desalination, hydrogen production, liquefaction, and unloading are different, the efficiency of hydrogen production and storage can be maximized by optimizing power capacity and power distribution through an ESS so that each system can achieve maximum efficiency. In addition, power supply is possible even under extreme conditions such as shutdown through a fuel cell, and it can be implemented as an independent system that does not require the input of external energy (such as a generator) other than eco-friendly energy. At the same time, since the production, storage, transportation, and unloading of hydrogen are all possible through a ship, it is easy to export not only domestically but also overseas. Additionally, the processing steps can be simplified through unloading at open sea, which contributes to improved supply efficiency and diversification of supply sources. Thus, it has advantages that differentiate it from existing hydrogen production facilities, storage facilities, and transportation equipment that were only capable of producing, storing, or transporting hydrogen.

Here, regarding the embodiments of the present invention described above, for example, the details regarding the offshore power generation facility using eco-friendly energy, the process of producing hydrogen by electrolyzing water, and the process of converting the produced hydrogen into liquid hydrogen are obvious to those skilled in the art by referring to existing offshore power generation systems, hydrogen production systems and methods, etc. Therefore, in order to simplify the explanation, it should be noted that the detailed description of the content that can be easily understood and implemented by those skilled in the art through prior art literature, etc., as described above, has been omitted.

Accordingly, as described above, an offshore platform for the production, storage, and transport of marine green hydrogen according to an embodiment of the present invention can be implemented. By doing so, according to the present invention, an offshore platform (FPSO) structure for the production, storage, and transport of marine green hydrogen is provided, which is configured so that the production of marine green hydrogen is carried out through a floating structure that produces marine green hydrogen using electricity produced from renewable energy in the ocean, and the storage, transport, and offloading of the produced marine green hydrogen can be carried out through a single platform. This allows for the easy construction of a large-scale production facility capable of producing, storing, and transporting marine green hydrogen based on eco-friendly energy without any greenhouse gas emissions, with a relatively simple configuration and low cost.

In addition, according to the present invention, a structure for a marine green hydrogen production, storage, and transporting platform (FPSO) is provided, which is configured to easily construct a large-scale production facility capable of producing, storing, and transporting marine green hydrogen without any greenhouse gas emissions based on eco-friendly energy as described above, with a relatively simple configuration and low cost. This solves the problems of conventional marine green hydrogen production systems and methods, which had limitations in efficiency due to the difficulty of mass production of hydrogen as they consisted of small-scale offshore wind turbines in coastal areas or fixed structures in shallow waters.

In addition, according to the present invention, a structure for a marine green hydrogen production, storage, and transporting platform (FPSO) is provided, which is configured to easily construct a large-scale production facility capable of producing, storing, and transporting marine green hydrogen without any greenhouse gas emissions based on eco-friendly energy as described above, with a relatively simple configuration and low cost. This solves the problems of conventional marine green hydrogen storage and transport systems and methods, which had limitations such as converting hydrogen into a compressed gas form to transport it to the coast via a pipeline, which occupies a large amount of storage space and requires a separate hydrogen supply chain on land due to the characteristics of hydrogen having a very low volume density, and converting it into ammonia, which allows for storing a large amount of hydrogen in the same storage space but requires additional energy to extract the hydrogen again, and especially, due to the toxicity of ammonia, there is a risk of environmental pollution and human casualties in the event of a spill.

Furthermore, according to the present invention, a structure for a FPSO (Floating Production, Storage and Offloading) for the production, storage, and transport of marine green hydrogen is provided, which is configured to easily construct a large-scale production facility capable of producing, storing, and transporting marine green hydrogen without any greenhouse gas emissions based on eco-friendly energy as described above, with a relatively simple configuration and low cost. As a result, liquid hydrogen can be produced at sea and unloaded immediately, allowing for immediate transport without land-based work not only domestically but also for export overseas. Additionally, the risk of hydrogen leakage, fire, or explosion can be eliminated through the floating structure installed in the open sea far from land. Furthermore, by constructing a large-capacity centralized platform corresponding to, for example, a large-scale offshore wind power complex, hydrogen can be produced, stored, and supplied more efficiently. This has the advantage of revitalizing the hydrogen economy through the expansion of hydrogen mobility and energy sector supply resulting from the activation of large-scale marine green hydrogen supply, and contributing to the establishment and implementation of national policies such as the reduction of carbon dioxide and fine dust.

Although the details of the offshore platform for the production, storage, and transport of marine green hydrogen according to the present invention have been described above through the embodiments of the present invention, the present invention is not limited to the contents described in the embodiments above. Therefore, it is obvious that the present invention can be modified, changed, combined, and replaced in various ways according to design needs and other various factors by those skilled in the art to which the present invention belongs.

### [Explanation of Symbols]

10. Offshore platform for the production, storage, and transport of marine green hydrogen
11. Power generation unit
12. Hydrogen production unit
13. Hydrogen storage unit
14. Hydrogen unloading unit
15. Offshore platform structure

## Claims

1. A marine platform for the production, storage, and transport of marine green hydrogen, comprising:
a power generation unit configured to perform a process of generating electrical energy at sea using eco-friendly energy;
a hydrogen production unit configured to perform a process of producing hydrogen by electrolyzing water using the electrical energy generated by the power generation unit;
a hydrogen storage unit configured to perform a process of converting the hydrogen produced through the hydrogen production unit into liquid hydrogen through a liquefaction process and storing it;
a hydrogen unloading unit comprising a mooring system and an unloading system for transporting and unloading the liquid hydrogen stored in the hydrogen storage unit; and
a marine platform structure configured in the form of a floating structure to form the main body of the marine platform.

2. The marine platform of claim 1,
wherein the power generation unit comprises an eco-friendly offshore power generation system that generates electrical energy at sea using eco-friendly energy including at least one of wind power, tidal power, wave power, and solar power, or an eco-friendly offshore power generation complex equipped with a plurality of eco-friendly offshore generators.

3. The marine platform of claim 1,
wherein the power generation unit is configured as an eco-friendly offshore power generation system or eco-friendly offshore power complex installed separately on the exterior of the offshore platform structure,
and the hydrogen production unit, the hydrogen storage unit, and the hydrogen unloading unit are installed on the offshore platform structure and formed integrally, so that the operations of producing, storing, and unloading hydrogen are respectively performed using electricity supplied through the above-mentioned power generation unit,
thereby configuring the facility in the form of a Floating Storage and Offloading (FPSO) facility, which enables hydrogen production without the emission of carbon-containing greenhouse gases, and simultaneously allows the production of marine green hydrogen through a floating offshore structure, the storage of the produced marine green hydrogen in the form of liquid hydrogen, and the transfer and offloading of the stored liquid hydrogen to be performed through a single platform.

4. The marine platform of claim 1,
wherein the offshore platform structure is configured in the form of an FPSO vessel in which the hydrogen production unit, the hydrogen storage unit, and the hydrogen unloading unit are each installed,
thereby enabling the production, storage, transportation, and unloading of hydrogen to all be performed through a single platform.

5. The marine platform of claim 1,
wherein further comprising an Energy Storage System (ESS) separately installed on the marine platform to ensure a stable power supply even when sufficient power is not supplied through the eco-friendly offshore power generation facility of the power generation unit.

6. The marine platform of claim 1,
wherein further comprising, in addition to the energy storage system (ESS), an emergency ESS and a hydrogen fuel cell separately installed on the offshore platform structure to enable power supply even in emergency situations where power is not supplied.

7. The marine platform of claim 1,
wherein further comprising a seawater desalination facility that performs a process of converting seawater flowing in from the outside into fresh water and supplying it to the hydrogen production unit in order to produce hydrogen by electrolyzing water with electricity generated through the power production unit.

8. The marine platform of claim 1,
wherein the hydrogen production unit is configured to perform a process of producing hydrogen by electrolyzing water using electric energy supplied from the power production unit and fresh water supplied through the seawater desalination facility, using PEM (Proton Exchange Membrane Electrolysis) or AE (Alkaline Electrolysis).

9. The marine platform of claim 1,
wherein the hydrogen storage unit is configured to store the gaseous hydrogen produced by the hydrogen production unit in the form of compressed gas in a dedicated storage tank before liquefying it, in order to supply hydrogen to an external system including the hydrogen fuel cell according to a predetermined setting, and to perform a process of storing the liquefied hydrogen generated through the liquefaction process in a plurality of C-type storage tanks.

10. The marine platform of claim 1,
wherein the hydrogen storage unit further comprises:
a boil-off gas (BOG) treatment means installed in each storage tank to recover boil-off hydrogen; and
a ventilation means (Ventilation Mast) for releasing hydrogen gas that leaks or is generated by the BOG into the atmosphere.

11. The marine platform of claim 1,
wherein the hydrogen unloading unit is configured to include a loading arm and a turret mooring system for the offloading of liquid hydrogen.

12. An FPSO vessel **characterized by** being configured to enable the production, storage, transportation, and unloading of marine green hydrogen to all be performed using the marine platform for the production, storage, and transport of marine green hydrogen described in any one of claims 1 to 11.

13. A method for producing marine green hydrogen configured to enable the production of hydrogen without the emission of carbon-containing greenhouse gases using eco-friendly energy, comprising:
a marine platform construction step in which a process is performed to construct a marine platform for the production, storage, transportation, and unloading of marine green hydrogen;
a production step in which a process is performed to produce marine green hydrogen using the marine platform constructed through the marine platform construction step;
a storage step in which a process is performed to convert and store the marine green hydrogen produced through the production step into liquid hydrogen using the marine platform;
a transportation step in which a process is performed to transport the marine green hydrogen produced through the storage step to a predetermined destination using the marine platform; A method for producing marine green hydrogen, comprising:
a loading step in which a process for unloading marine green hydrogen transported through the transport step is performed using the marine platform;
wherein the marine platform is configured in the form of an FPSO vessel using the marine platform for the production, storage, and transport of marine green hydrogen as described in any one of claims 1 to 11.
